# EUROPEAN PATENT SPECIFICATION

(11) **EP 3 721 159 B1**
(45) Date of publication and mention of the grant of the patent: **24.09.2025**
(21) Application number: 18886447.4
(22) Date of filing: 05.12.2018
(51) Int. Cl.: F27B 17/02, B01D 15/10, F27D 1/00, G01N 30/30

(54) **GAS CHROMATOGRAPHY MODULAR OVEN**
MODULARER GASCHROMATOGRAFIEOFEN
FOUR MODULAIRE POUR CHROMATOGRAPHIE EN PHASE GAZEUSE

(30) Priority: 05.12.2017 US 201762594824 P
(43) Date of publication of application: 14.10.2020
(73) Proprietor: Mécanique Analytique Inc., Thetford Mines, QC G6G 7W1 (CA)
(72) Inventor: GAMACHE, Yves, Thetford Mines Québec G6G 7W1 (CA); LAMONTAGNE, André, Thetford Mines Québec G6G 7W1 (CA)
(74) Representative: Zacco Sweden AB
(86) International application number: PCT/CA2018/051556
(87) International publication number: WO 2019/109183

(56) References cited:
- EP-A2- 0 184 283
- CA-A1- 2 837 364
- US-A- 4 057 998
- US-A- 5 983 710
- US-B2- 8 336 366

## Description

### TECHNICAL FIELD

The technical field generally relates to chromatography applications, and more particularly to a gas chromatography oven.

### BACKGROUND

In the field of gas chromatography (GC), laboratory and process gas chromatographs are central in the design of experiments for various analytical chemistry applications. Available gas chromatographs typically share similar characteristics, components and functions. For example, they usually include one large ramping oven on top of which are installed GC components, such as detectors, sample concentrators, valves, columns, and the like. US4057998 discloses a gas chromatography modular oven with a main enclosure, a backwall and sidewalls, with heating element and temperature sensor.

Despite typically providing enough space for the installation of some custom parts, available gas chromatographs can sometimes be difficult to customize. Indeed, customizing a gas chromatograph can not only require a substantial amount of time to a system integrator, but can also be associated with non-negligible costs. Moreover, designing custom parts, such as, for example, oven boxes for isothermal oven, is in itself time-consuming, and known to be expensive.

There is thus a need for a gas chromatograph architecture that addresses at least some of the challenges presented above.

### SUMMARY

There is provided a gas chromatography modular oven as claimed in claim 1, including a main enclosure, one or more panel and one or more thermal plate. The main enclosure includes a backwall and sidewalls defining an internal volume, the sidewalls includes a plurality of panel-engaging structures defining multiple panel-mounting positions within the internal volume. The one or more panels are releasably engageable with the panel-engaging structures to divide the main enclosure into individual cells. The one or more thermal plates are releasably engageable with the backwall within an associated one of the individual cells, each thermal plate being operable to set an operation temperature in the associated individual cell, thereby creating temperature-controlled zones within the gas chromatography modular oven.

### BRIEF DESCRIPTION OF THE DRAWINGS

Figure 1 is a GC lab chromatograph from prior art.
Figure 2 illustrates a gas chromatography modular oven, in accordance with one embodiment.
Figure 3 illustrates a gas chromatography modular oven, in accordance with another embodiment.
Figure 4 is a cross-sectional view of a thermal plate, in accordance with the invention.
Figure 5 is a top view of the thermal plate illustrated in Figure 4.
Figure 6 shows a schematic representation of a gas chromatography oven, in accordance with another embodiment.
Figure 7 shows a schematic representation of a gas chromatography oven, in accordance with another embodiment.
Figure 8 shows a schematic representation of a gas chromatography oven, in accordance with another embodiment.
Figure 9 shows a schematic representation of a gas chromatography oven, in accordance with another embodiment.
Figure 10 is a GC lab chromatograph oven from prior art.
Figures 11A-B illustrate a chromatographic column cartridge coupled with a compact oven, in accordance with one embodiment.
Figures 12A-F show different configurations of the GC modular oven, in accordance with some embodiments.
Figure 13 is an explosion-proof GC lab chromatograph oven from prior art.
Figures 14A-C show different configurations of an explosion-proof compact ramping oven, in accordance with some embodiments.

### DETAILED DESCRIPTION

In the following description, similar features in the drawings have been given similar reference numerals, and, to not unduly encumber the figures, some elements may not be indicated on some figures if they were already identified in one or more preceding figures. It should also be understood herein that the elements of the drawings are not necessarily depicted to scale, since emphasis is placed upon clearly illustrating the elements and structures of the present embodiments.

### Gas chromatography oven: context and applications

Gas chromatography (GC) is a technical field where constituents of a gas sample are separated in order to be individually analysed. Typically, a sample gas is injected at an injection port into a chromatography column and carried by a carrier gas towards a detector to be analysed. The sample gas can include one or more analytes (also referred to as "impurities" or "species") to be detected, carried by the carrier gas along the chromatography column. The different species are outputted at different moments in time at the detector and are associated with an elution peak. The detector is typically operatively connected to an analysis system and a computer, so as the elution peak can be processed by a third-party software.

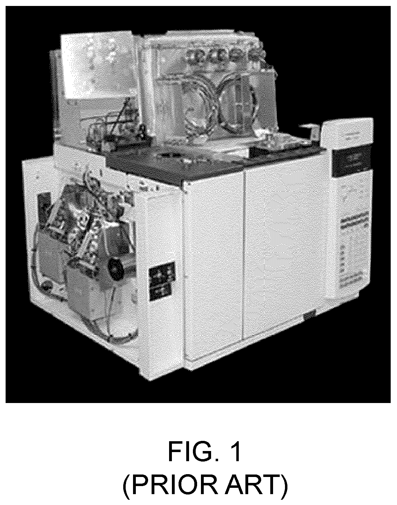

The chromatography column is typically kept in a temperature-controlled oven positioned downstream of the injection port and upstream of the detector, which allows to maintain the chromatography column at a predetermined temperature or ramping the temperature of the chromatography column at a given rate, depending on the targeted applications. An example of a GC oven according to the prior art is illustrated in Figure 1.

The chromatography column can be wound into a spiral within the GC oven, hence accommodating different length of columns within the oven, depending on the analytes under investigation and their associated elution time.

GC ovens can be suitable for use in conjunction with chromatography systems using all types of chromatography columns, such as but not limited to capillary column, pack column, micro pack column, or any other types of column generally used in the gas chromatography field.

### Gas chromatography modular oven

In accordance with embodiments, there is provided a gas chromatography (GC) modular oven for use, for example, in analytical chemistry applications, for instance for analyzing the constituents of a gas. Embodiments described herein below permit the design and the fabrication of a compact and modular GC oven. The modular GC oven is configurable by the user and is based on a "building block approach". The GC modular oven can be quickly and easily reconfigured to accommodate new needs and/or applications.

Broadly described, the gas chromatography modular oven includes a main enclosure, one or more panels (referred to as "the panel(s)") and one or more thermal plates (referred to as "the thermal plate(s)"). The main enclosure includes a backwall (sometimes referred to as "back panel") and sidewalls (sometimes referred to as "side panels") defining an internal volume. The sidewalls include a plurality of panel-engaging structures defining multiple panel-mounting positions within the internal volume. The panel(s) can be releasably engageable with the panel-engaging structures to divide the main enclosure into individual cells. The thermal plate(s) are releasably engageable with the backwall within an associated one of the individual cells and are operable to set an operation temperature in the associated individual cell, thereby creating temperature-controlled zones within the gas chromatography modular oven.

It is to be noted that, in the present application, the term "thermal plate" will be used as referring to an operable unit or module, and more particularly to a unit or module allowing to adjust and set the operation temperature in the associated individual cell. In this context, the GC modular oven will be referred to as a structure including one or more individual temperature cell(s), each one of the temperature cell(s) including one or more thermal plate(s), which may be grouped together or separated using panels (sometimes referred to as "partition walls") to form an individual temperature cell. Each one of the thermal plates can have one or more GC component(s) (*e.g*., valves, chromatography column, pack column, capillary columns, fittings, traps, and/or the like) mounted thereon.

The use of multiple individual temperature cells can advantageously enable the possibility of integrating multiple independently operable individual cells within the same GC oven, while allowing to maintain each one of the individual temperature cells at a predetermined and isolated temperature from one another.

Now that the gas chromatography has been broadly presented, different embodiments will be described in greater detail.

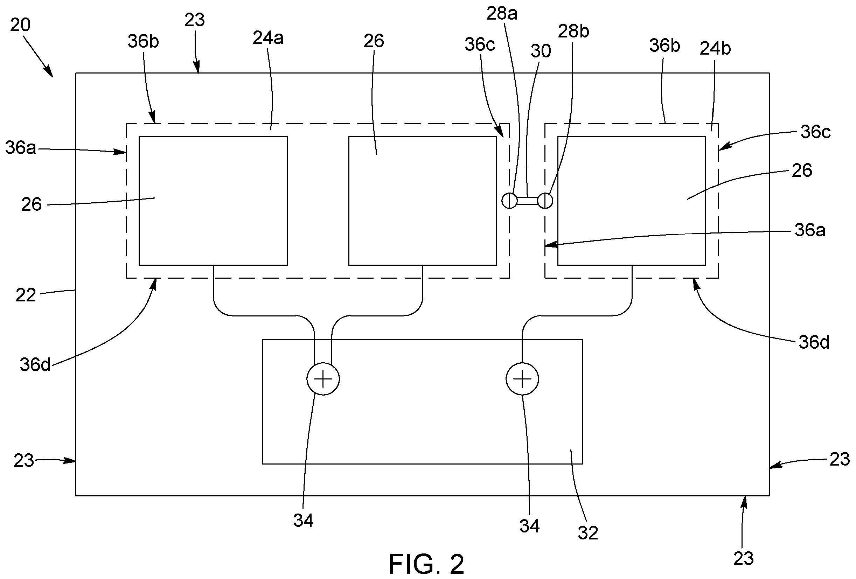

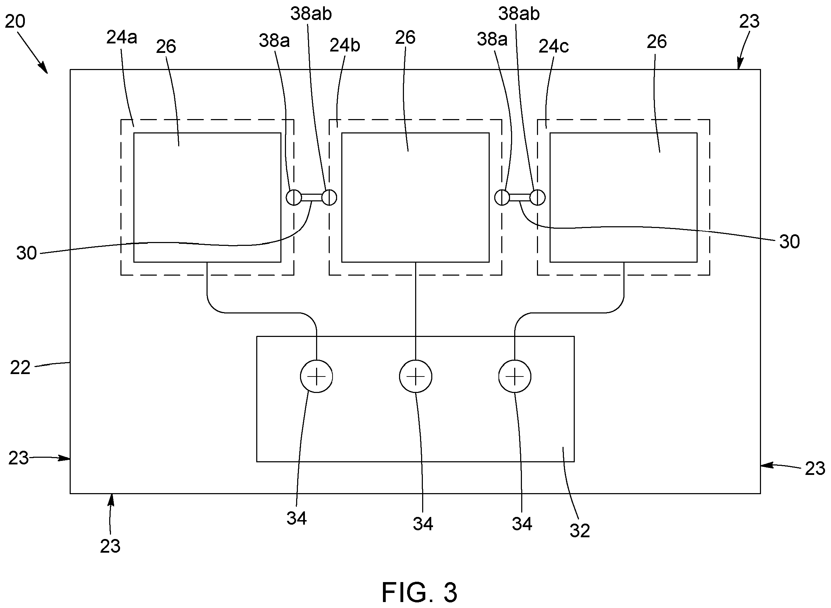

With reference to Figures 2 and 3, embodiments of a GC modular oven 20 are shown.

The GC modular oven 20 includes a main enclosure 22. The main enclosure 22 defines an internal volume into which can be mounted individual cells 24, which will be described in greater detail later. Each individual cell 24 can include associate GC parts, components and accessories. The main enclosure 22 generally includes a door (not shown in Figure 2) for accessing the internal volume (i.e., the content) of the modular oven 20 when required (e.g., for preparing or setting up the GC modular oven 20 prior to and/or after an experiment).

As illustrated, the main enclosure 22 has a substantially rectangular cross-section. In one implementation, the main enclosure has dimensions ranging from approximately 10 to 50 cm x 10 to 50 cm x 5 to 20 cm (height x width x depth). It will however be understood that the geometrical configuration, as well as the dimensions of the main enclosure 22 could vary, and that the main enclosure 22 can be embodied by any structure or components assembled together defining a spaced admitting the insertion of the required GC components.

As previously mentioned, the main enclosure 22 includes sidewalls 23 and a backwall 38 defining the internal volume of the GC modular oven 20. In some embodiments, the main enclosure 22 includes four sidewalls joined and a backwall 38 at respective corners of the main enclosure 22 (e.g., in the situation in which the main enclosure 22 has the shape of a parallelepiped) and a front opening which can be selectively open/closed with the door (not illustrated). In other embodiments, the number of sidewalls 23 and the overall shape of the GC modular oven 20 could vary.

The sidewalls 23 and the backwall 38 can be configured to provide thermal insulation to the GC oven 20. In the context of thermally-insulating sidewalls 23 and backwall 38, the sidewalls 23 and the backwall 38 can be made from a stack of different materials, for example a layer of an insulating material positioned between (*i.e*., "sandwiched") two layers of thermally conductive material. The thermally conductive material can be, for example and without being limitative, aluminum, stainless steel, steel alloys, or other materials, while the insulating material can be mineral wool, flexible alumina fibers, solid porous ceramic, or other materials having insulating properties.

An external surface of the sidewalls 23 and the backwall 38 of the main enclosure 22 (*i.e*., the surface of the sidewalls 23 visible from outside the GC modular oven 20) can be covered with a coating, a layer or painting to provide a finished look to the GC modular oven 20.

The GC modular oven 20 includes individual temperature cells 24 (also sometimes referred to as the "individual cells 24"). The individual cells 24 define a temperature-controlled zone within the GC modular oven 20, *i.e.,* a zone within the main enclosure 22 in which the temperature can be controlled, *i.e*., maintained, ramped up or ramped down. In some scenarios, the temperature can be maintained at a predetermined constant value. In these implementations, the temperature is said to be "isothermally controlled" or to be an "isothermal temperature". In other scenarios, the temperature can be ramped at a given rate, so as to obtain, for example, a specific gradient of temperature in the individual cells 24, depending on the analytical applications. It is to be noted that the number of individual cells may vary, and that, in such circumstances, the individual cells are numbered 24a, 24b, 24c, and so on, depending on the number of individual cells provided in the GC modular oven 20.

Now referring to Figures 2 to 4, the structure of the individual cells 24 will now be described.

As illustrated, each individual cell 24 is confined within four panels 36a-d and a portion of the backwall 38, and further has a front opening. It will readily be understood that the front opening of the individual cells 24 is generally aligned with the front opening of the GC modular oven 20, so as the content of each individual cell 24 is accessible from outside the GC modular oven 20 when the user opens the door. It is to be noted that at least some of the four panels 36a-d could be the sidewalls 23 of the main enclosure 22, and, so the terms "panel" and "sidewall" could be in some circumstances used interchangeably, for example when one of the four panels 36a-d is a sidewall 23.

The four panels 36a-d can be fixed to each other and/or to a thermal plate to define an open-ended O-shaped structure (sometimes referred to as the "open-ended structures"). In one embodiment, the panels can be engaged, fixed and/or attached to a thermal plate, so as to form "integrated" individual cells 24 that can be releasably engaged, *i.e*., mounted to and/or unmounted from the backwall 38. In this embodiment, the "integrated" individual cells 24 define individual releasably mountable cubicles. One or more individual releasably mountable cubicles can be mounted in the internal volume of the main enclosure 22 of the gas chromatography modular oven. The backwall 38 is configured to close one end of the open-ended O-shaped structure.

The side panels 36a-d can comprise hole(s) (sometimes referred to as "mounting holes") and/or slot(s) for GC components or accessories. Such GC components include, but are not limited to tubes for gas connection, and allow the operational communication (*i.e*., fluid, electrical, optical and/or mechanical communication) from one individual cell 24a to another adjacent and/or neighbouring individual cell 24b, and more particularly between some of the GC components 50a-c.

For example, now referring to Figure 2, the side panel 36c of the first individual cell 24a can comprise a hole 28a and the side panel 36a of the second individual cell 24b can comprise a corresponding hole 28b, hence admitting a passage of a connecting element 30 (for example a gas chromatography column, a tube, or other components) from the first one to the second one of the individual cells 24a,b (respectively).

In some embodiments, the side panels 36a-d have standard mounting holes provided therein. The expression "standard holes" herein refers to holes that are compatible with dimensions specified by chromatographic components manufacturers, and so can be useful for easily and quickly installing standard chromatographic components, such as, and without being limitative valve, manifold, "T" and/or "X" connector(s). Such a feature can be useful for facilitating the configuration and the customization of the GC modular oven 20, as well as optimising the space use so as to achieve a more compact design, based on the targeted GC application(s). Typically, those types of connectors (*i.e*., the valve, manifold, "T" and "X" connectors) are installed on the GC base plate (i.e., the back sidewall of the main enclosure of the GC oven), and can occupy, consume and/or waste a lot of space. This feature of the GC modular oven 20 described herein can notably be advantageous when used in conjunction with the standard mounting holes and/or slots that can be provided in the side panels 36a-d, which can allow gas tube(s) (or other GC component(s)) to go from one individual cell 24 to another adjacent and/or neighbouring individual cell, as well as ensuring a fluid communication between the individual cells 24 and potentially reducing the presence of cold spots, as the tube(s) is typically not submitted to an ambient temperature region due to the close proximity of the different individual cells. It will be understood that the exposition of the tube(s) to the ambient temperature and its potential effect(s) can be minimized or mitigated by the abovementioned configuration.

Quite similarly to the sidewalls 23 of the main enclosure 22, the panels 36a-d of the individual cells 24 (i.e. the side panels 36a-d and the backwall 38) are provided with thermal insulation. For example, and without being limitative, the panels 36a-d can also comprise an insulating material, such as the ones which have been previously introduced, the insulating material being provided between two layers (*i.e*., "sandwiched") of a thermally conductive material, such as aluminium or any other thermally conductive material listed above. The thermally conductive material is used to uniformly distribute the heat within the individual temperature cells 24, while the insulating material is provided to ensure the maintenance of the temperature within the temperature cells 24, despite being in contact with other temperature cells 24 being maintained at different (i.e. higher or lower) temperatures.

When two individual cells 24a,b are placed one next to the other, two of their corresponding panels can be put in contact in a common region, *i.e*., along their respective outer surface. Alternatively, two adjacent individual cells 24a,b could share a common panel.

In the context of Figure 2, for example, the side panel 36c of the first individual cell 24a is put in contact with the side panel 36a of the second individual cell 24b. In order to maintain an appropriate temperature in each individual cell 24a,b, the panels 36a-e can all be thermally isolated from one another, but also from the main enclosure 22 (i.e., the sidewalls 23 of the main enclosure 22), which can help reducing the heat transfer from one individual cell 24a to the other individual cell 24b and/or from outside the GC modular oven 20. In some embodiments, for example when the first and second individual cells 24a,b are contiguous, each individual cell 24a,b is insulated from one another by separating the panels 36a-d of the first individual cell 24a from the panels 36a-d of the second individual cell 24b. Such a separation may be made by using an insulating standoff (e.g., a leg protruding from on the panels 36a-d of at least one of the two adjacent individual cell 24a,b). The insulating standoff is herein understood as a spacer and may be made from, for example and without being limitative, ceramic or any other insulating material.

It will be readily understood that different materials could be used for forming the side panels 36a-d, as well as their insulating and thermally conductive components, and that various dimensions could be used in the design and fabrication of the individual cells 24, according to the user's needs.

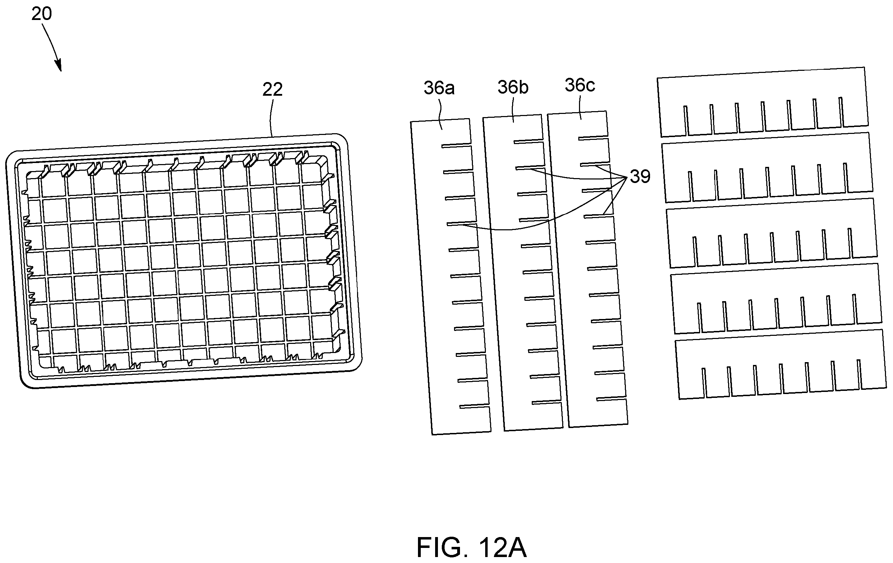

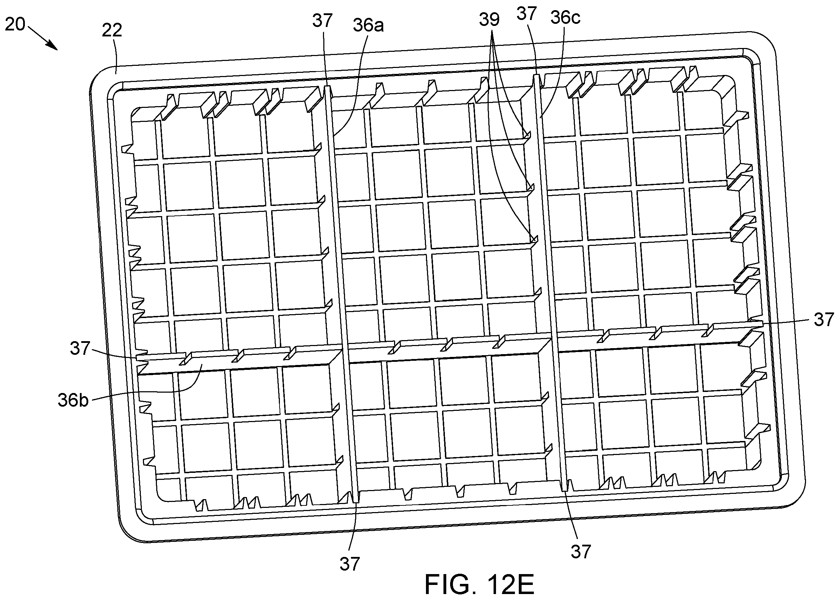

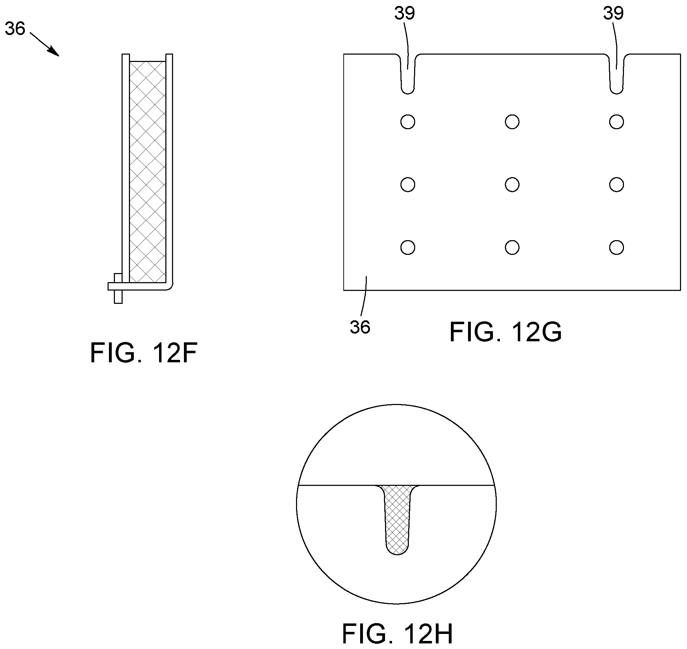

Now turning to Figures 12A-F, various embodiments of a GC modular oven 20 are shown.

The main enclosure 22 includes a plurality of panel-engaging structures defining multiple panel-mounting position within the internal volume. In the illustrated embodiments, the panel-engaging structures include a plurality of slots 37 provided in the internal surface of the main enclosure 22. The slots 37 generally extend from the front portion towards the back portion of the main enclosure 22 along at least a portion of the depth of the main enclosure 22.

In the depicted embodiments, the panels 36a-d forming the individual cells include notches 39. The panels 36a-d with notches 39 (illustrated for example in Figure 12F) are similar to the panels 36a-d in terms of structure, composition and function.

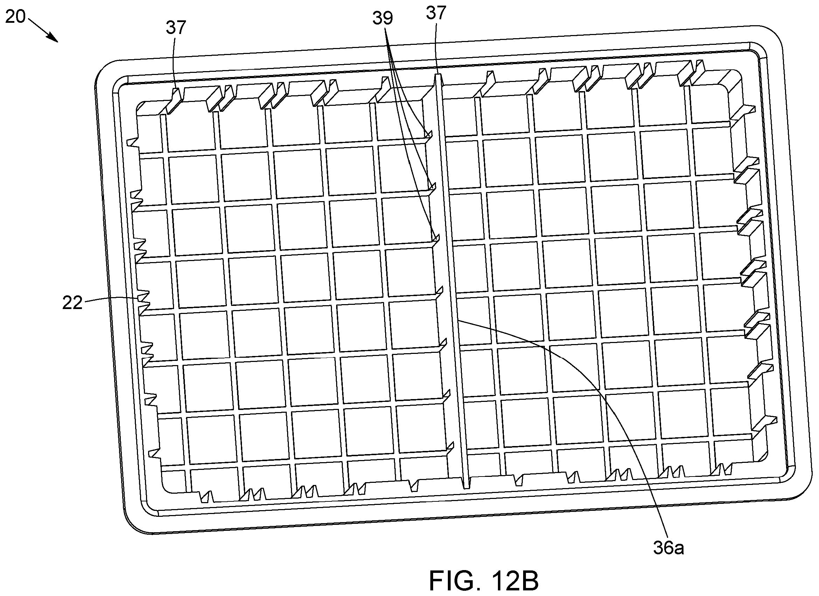

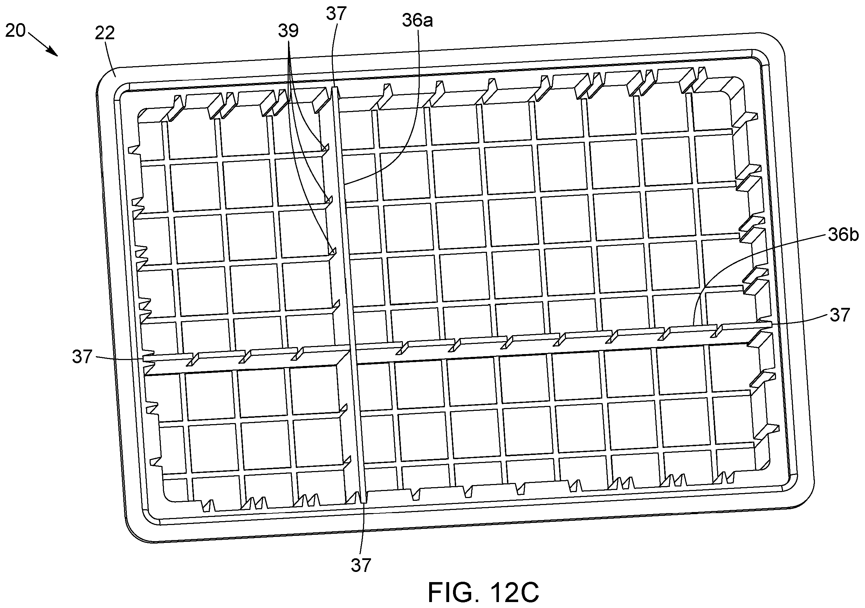

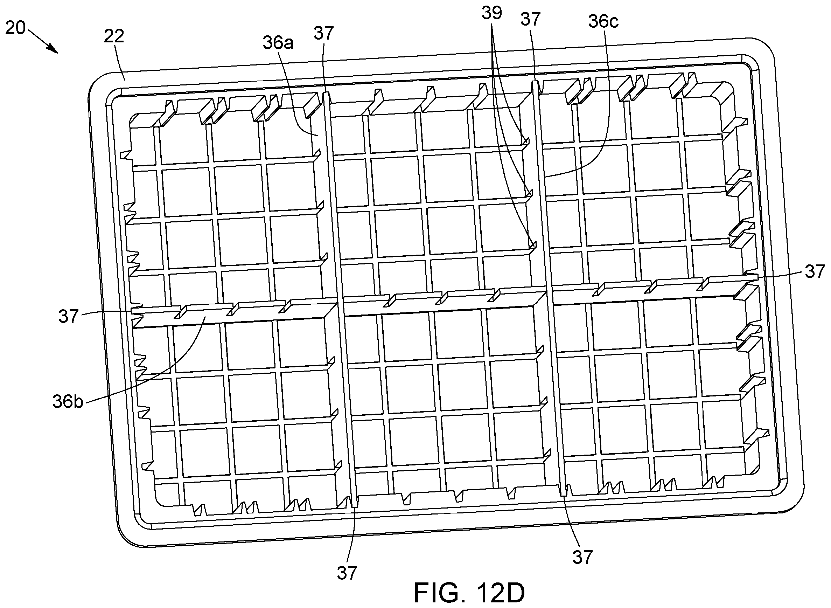

The embodiments of Figures 12A-F illustrate the modular aspect of the gas chromatography oven in that the panels 36a-d may be removably mounted to the main enclosure 22. More particularly, the panels 36a-d are slidably engageable with corresponding slots 39 to define individual cells 24a,b (see for example Figure 12B), four individual cells 24a-d (see for example Figure 12C), six individual cells (see Figures 12D-E), or any other number of individual cell(s). It will be readily understood that such panels 36a-d may be advantageous, because they allow the user to selectively design the configuration of the internal volume of the GC modular oven 20, and rearrange the size, as well as the number of individual cells within the main enclosure 22 of the GC modular oven 20. As such, the user can revisit and reconfigure the individual cells of the GC modular oven 20, based on requirements that may be dictated, for example, by a targeted analytical application.

In some embodiments, the notch 39 is sized and configured to receive a portion of another panels. More particularly, the notch 39 formed in a panel is engageable with the notch 39 of another panel so as they are matingly engaged when abutting each other.

When the panels 36a-d are engaged and mounted in the mounting structures of the main enclosure 22, mechanical fasteners may be used to fix the panels 36a-d in position within the main enclosure 22, so that they remain in place when performing experiments. Such mechanical fasteners may be removed to permit the reconfiguration of the panels 36a-d within the main enclosure 22.

As it has been previously introduced, the individual cells 24 can include one or more thermal plate(s). In some embodiments, the thermal plate(s) are mounted to the backwall 38.

In the embodiment illustrated in Figure 2, the GC modular oven includes two individual cells 24a,b: the first individual cell 24a includes two thermal plates 26 while the second individual cell 24b includes one thermal plate 30. In an alternate embodiment, such as the one depicted in Figure 3, the GC modular oven 20 includes three individual cells 24a,b,c, each one including a respective thermal plate 26.

In some embodiments, the thermal plate 26 is a hotplate. In other embodiments, the thermal plate 26 can include a cooling device based, for example on Peltier effect, for example to adjust the temperature.

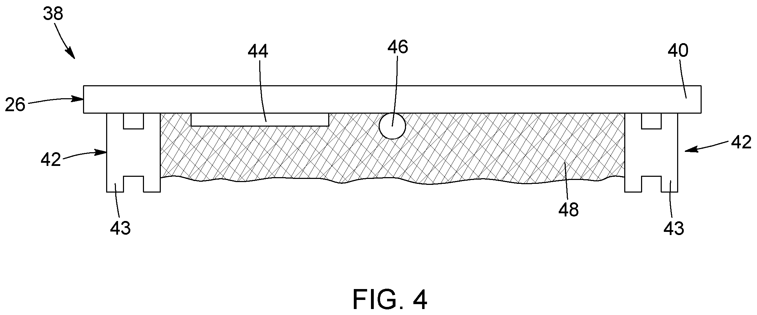

Now turning to Figure 4, a cross-sectional view of a thermal plate (*e.g*., the hot plate 26) is shown. The thermal plate 26 is configured to be removably mountable to the backwall 38 of the main enclosure 22 (directly or indirectly). As illustrated, the thermal plate 26 can be mounted in one individual cell 24 and depending on the volume of the individual cell 24, one or more (e.g. two, three, four or more) thermal plates 26 can be mounted in the individual cells. Multiple thermal plates 26 can be mounted in a larger individual cell 24 to either maintain the whole internal volume at a uniform predetermined temperature or to heat some zones of the individual cell 24 at different temperature.

In some embodiments, the thermal plate 26 can define a portion of the back portion of an individual cell 24.

The thermal plate 26 includes a mounting plate 40. The mounting plate 40 can be made as a monolithic piece made, for example, from aluminum, or any thermally conductive material which has been previously listed. The mounting plate 40 is notably used to distribute the heat uniformly in the individual cell 24 or at least a portion thereof (*e.g*., in a limited region or zone of the individual cell 24). More generally, the mounting plate 40 acts as a heating surface, and so can be seen as a local heat source in each individual cell 24. Dimensions (width, length and/or thickness) of the mounting plate 40 can vary according to the required dimensions of the individual cells 24, and can depend, among others, on the targeted application.

As illustrated, the mounting plate 40 includes a cut out 45 (illustrated as two facing letters "C"). The cut out 45 may be useful, for example, for accessing one or more rotary valve actuator(s), which are generally located outside the GC modular oven 20. It will be readily understood that the dimensions and overall shape of the cut out 45 may vary, depending on the dimensions of the actuator(s).

The thermal plate 26 includes one or more spacer(s) 42. The mounting plate 40 is mechanically affixed to the spacer 42.

In some embodiments, the spacer 42 extends along a perimeter of the mounting plate 40 and below the mounting plate 40. When the mounting plate 40 is mounted to the backwall 38 of the main enclosure 22, the spacer 42 is in direct contact with the backwall 38, and a gap (*i.e*., a space) is formed between the mounting plate 40 and the backwall 38 of the main enclosure 22. Such a gap is typically filled with an insulating material 48, similar to the ones which have been previously described. In some embodiments, the mounting plate 40 and the spacer 42 are formed as one piece.

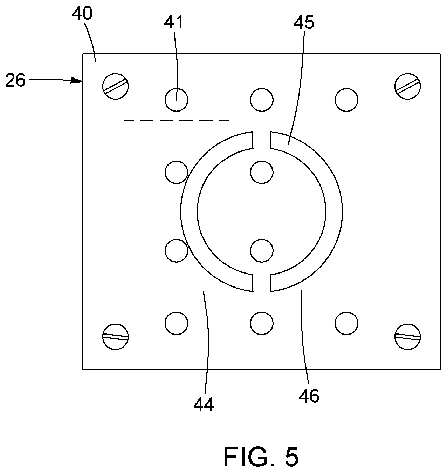

In some variants, such as the one illustrated in Figures 4 and 5, the spacer 42 can be embodied by four legs 43 extending below the mounting plate 40 (towards the backwall 38), and each leg 43 can be provided in a respective corner of the mounting plate 40.

In some variants, the spacers 42 are made of a thermally insulated material to provide the mounting plate 40 with thermal insulation.

Once the spacer 42 is put in contact with the backwall 38, the thermal plate 26 can be fixed thereto by inserting, for example, at least one mechanical fasteners through the mounting plate 40. The mechanical fasteners can be, for example and without being limitative, nails, clips, snap, or any other fasteners already known by one skilled in the art that allow removably mounting the thermal plate 26 to the backwall 38 of the main enclosure 22. The mechanical fasteners are typically insertable through each corners of the thermal plate 26 but could alternatively be insertable elsewhere on the thermal plate 26 (e.g., in its central portion). In some embodiments, the legs 43 provided in each corner of the thermal plate 26 (and below the mounting plate 40) comprise an aperture defined therethrough, into which the mechanical fastener(s) can be inserted.

In the illustrated variant, the thermal plates 26 each include a corresponding heating element 44 (sometimes referred to as the "heater") and a corresponding temperature sensor 46, both contacting the mounting plate 40. The heater 44 and the temperature sensor 46 are in thermal connection with the mounting plate 40 of their respective thermal plate 26. The heating element 44 can be in direct contact with the mounting plate 44.

The heating element 44 is operable to heat the mounting plate 40 at a predetermined temperature which can be selected (and changed, if needed) by the user, hence heating the individual cell 24 or a portion thereof at a predetermined temperature. As illustrated in Figure 4, the heating element 44 and the temperature sensor 46 are provided below the mounting plate 40, *i.e.,* in the gap formed between the mounting plate 40 and the backwall 38. In such a configuration, the heating element 44 and the temperature sensor 46 are in direct thermal connection with the mounting plate 40. In an alternate configuration, the heating element 44 and the temperature sensor 46 could be in indirect thermal connection with the mounting plate 40, *i.e*., some intermediate(s) could be provided for ensuring an efficient heat transfer between the heating element 44, the sensor 46 and/or the mounting plate 40.

In an alternate configuration, a cooling system such as a Peltier cell could also be provided to cool down the mounting plate 40, when needed. It will be understood that the heating and/or cooling systems can include different thermoelectric devices and/or components based, for example on the Seebeck and/or Peltier effect.

When the thermal plate 26 is mounted to the backwall 38 of the main enclosure 22, the heating element 44 and the temperature sensor 46 are typically positioned between the mounting plate 40 and the backwall 38. As such, the heating element 44 and the temperature sensor 46 are generally positioned near or in the back portion of the GC modular oven 20 (i.e., near the backwall 38 of the main enclosure 22).

The abovementioned configuration of the heating element 44 and the temperature sensor 46 can be useful, for example, because their positioning does not interfere with the positioning of the chromatography components included in the individual cells 24. On this aspect, each individual cell 24 can include one or more GC components (numbered 50a, 50b, 50c, and so on, depending on the number of GC components).

In some embodiments, the GC components are mounted on the top of the mounting plate 40 (*i.e*., on the top of the thermal plates 26), as it will be described below, and so project within the internal volume of the main enclosure 22. The GC component can be embodied, for example and without being limitative, valves, chromatography column, pack column, capillary columns, and/or the like.

With reference to Figure 5, the structure of the mounting plate 40 will now be described in more detail.

The mounting plate 40 can comprise mounting holes 41. As illustrated, the mounting holes 41 are embodied by an array of standard holes across the mounting plate 40. In some embodiments, the mounting holes 41 are evenly distributed so as to form a regular array. In the illustrated embodiment, the mounting plate 40 includes twelve circular mounting holes 41 regularly spaced apart across the surface of the mounting plate 40. As it will be readily understood, the mounting holes 41 can have identical or different diameter. Their general shape, geometrical features and/or dimensions could of course vary, depending on the targeted application. Such mounting holes 41 are however generally provided to further facilitate the integration of the GC components within the GC modular oven 20 by allowing to mount standard chromatographic components.

The mounting plate 40 hence allows designing standard GC components and associated pieces that can be used in the individual cells 24, which in turn permits developing standard chromatographic methods, and so can potentially reduce design and assembly time, as well as the costs associated to these steps.

In some embodiments, the GC modular oven 20 can also include one or more gas inlets and outlets, positioned at locations compatible with the "building block" approach previously introduced, for ensuring the distribution of the gas within the GC modular oven 20. The building block approach allows the user to use standard tubes and fitting assembly, which may facilitate assembly of the GC modular oven 20 and may reduce configuration and integration time. For example, and without being limitative, the gas inlet and outlet can be provided in the back of the GC modular oven 20.

In order to facilitate the assembly of the GC modular oven 20, and keep the design as compact as possible, a kit including special tools can be provided. The tool can be, for example and without being limitative, special spanner(s) and/or screw driver(s) to facilitate the assembly of the GC modular oven 20, the insertion and mounting of different GC components inside the GC modular oven 20. In some implementations, the tools are designed such that they provide easy access to GC components and/or the inside of the GC modular oven 20. The kit can be useful, for example, for connecting various GC components (e.g. a chromatographic column with a valve). In some embodiments, the kit can be used to easily connect and tighten the GC components to one another.

In some implementations, one or more GC component(s) can be mounted to or into the sidewalls 23 of the GC modular oven 20 and/or to the side panels 36a-d, prior to their installation into the GC modular oven 20. More particularly, some GC components can be mounted to the side panels 36a-d of the GC modular oven 20, and then the side panels 36a-d may be mounted in the GC modular oven 20.

Each individual cell 24 can further include electronics, mechanical, electromechanical or optical components and/or devices required for the functioning of the GC modular oven 20. Such components can include, for example and without being limitative, electrical circuits, batteries, resistors, inductors, capacitors, switches, current and/or voltage sources, resistances, inductances, capacitances, tube, capillary, pump, connectors, fans, optical fibers, lenses, mirrors, filters, gratings, prisms, windows, combinations thereof, or any other components typically included in gas chromatographs.

The individual cell 24 as described above may be, in some implementations, impervious, for example by providing a first and/or second joint seals in extending along the mounting structures (*e.g*., the slots 37) or at least some portions of the side panels 36a-d (*e.g*., along at least a periphery of the panels 36a-d). Such a characteristic may be useful, for example, if a targeted application requires to purge the internal volume of the individual cell 24. Nitrogen, argon or other gases may be used as purge gases, which could be useful if a hazardous gas is used in the GC modular oven 20. In such implementations, a detector may be provided with the GC modular oven 20. The detector may be placed in fluidic communication with the purge gas (i.e. protrude in the individual cell 24), in order to measure contaminations level in the gas and/or in the individual cell 24.

The GC modular oven 20 includes a temperature controller 32 operatively connected to the individual cells 24. As its name entails, the temperature controller 32 is a component used to control the temperature of the individual cells 24 to which it is connected. In the context of the current description, the temperature controller 32 is configured to control the temperature (i.e. select and monitor the temperature) in each individual cell 24. The temperature controller 32 can be provided with a user interface such as adjustable knobs or buttons or computer-implemented interface for selecting a temperature value within a predetermined range. Of course, this range depends on the characteristics of the heater 44 (or the cooling system), and is not a limitation of the controller 78 itself. The temperature controller 32 can also be provided with a display for indicating the selected temperatures.

As it will be readily understood, the temperature controller 32 can be embodied by any type of temperature controllers, such as, and without being limitative, on-off controllers, proportional controllers, fuzzy logic controllers and proportional-integral-derivative controller (PID) controllers.

The heating element 44 and the temperature sensor 46 can be operatively connected to the temperature controller(s) 32, according to the configuration which has been described. More particularly, the temperature controller(s) 32 can have the heating element 44 as an output and the temperature sensor 46 as an input, and upon a selection of the predetermined temperature by the user (for example using the individual control 34), the heating element 44 is set at this predetermined temperature, and the associated individual cell 24 is heated or cooled at the predetermined temperature. By its positioning with respect to the heating element 44, the temperature sensor 46 is in thermal connection with the heating element 44 and can measure the actual temperature at the mounting plate 40, which can be useful for tracking the temperature and/or temperature deviations within the individual cells 24 and for making appropriate adjustments when required. In some embodiment, the temperature controller 32 can be provided with an automated feedback loop so as to track the temperature at the mounting plate 40 and automatically adjusting it if diverging from the predetermined temperature value by a given threshold value.

In the embodiment illustrated in Figure 2, the GC modular oven 20 includes two individual cells 24. The first individual cell 24a can be maintained at a temperature *T₁,* while the second cell 24b can be maintained at a temperature *T₂.* The temperature controller 32 is operable to set the values *T₁* and *T₂.* The temperature can range, for example from 0 to 400°C (*i.e*., below, approximately equal to or above the ambient temperature when used in combination with an appropriate heater and/or cooling system). More particularly, in this context, the temperature controller 32 is operatively connected to the temperature sensor 46 of each thermal plate 26. More specifically, the temperature controller 32 can receive the temperature sensor 46 as an input, display the temperature as measured in the individual cells 24, compare this value to the set values *T₁* and *T₂,* and, in some embodiments, adjust the temperature.

In some embodiments, such as the one illustrated in Figure 2, only one temperature controller 32 is used to control the temperature in the two individual cells 24a,b. More specifically, the temperature controller 32 is connected to each thermal plate 26: two of the thermal plates 26 are maintained at a first predetermined temperature, while the other one of the thermal plates 26 is maintained at a second predetermined temperature. Similarly, the embodiment illustrated in Figure 3 shows one temperature controller 32 associated with three individual cells 24 and connected to the three thermal plates 26, each being maintained at a different predetermined temperature. In an alternate embodiment, one temperature controller 32 per individual cell 24 could be used. It is hence understood that the number of temperature controller(s) 32 used in the GC modular oven 20 could be equal or smaller than the number of individual cells 24 provided. For example, if a GC modular oven 20 includes n individual cells 24, the modular oven 20 could include *n, n-1, n-2, ..., 1* temperature controller(s) 32.

The temperature controller 32 includes at least one individual control. While the ratio of temperature controllers 32 to the individual cells 24 can vary according to the embodiments, it will be readily understood that each individual cell 24 is associated with a corresponding individual control 34. Such an individual control 34 can be embodied, for example, by the adjustable knobs or buttons which have been described above. The individual control 34 is configured and operable to set the temperature in the corresponding one of the individual cells 24. More particularly, the individual control 34 can be used to independently adjust the temperature in each one of the thermal plates 26. In the context of the embodiment illustrated in Figure 2, while the GC modular oven 20 includes one temperature controller 32, the temperature controller 32 includes two individual controls 34, each one being operatively connected to a respective thermal plate. Generally, if a GC modular oven 20 includes *m* thermal plate(s), the GC modular oven 20 includes *m* individual control(s). More particularly, the ratio of thermal plate(s) to the individual control(s) 34 is typically 1:1.

While the control of the individual cells 24 and thermal plates 26 can be useful to operate the individual cells 24 under different conditions, it is also feasible, using the GC modular oven presented in the current description, to combine the individual cells 24 and/or the thermal plates 26 to create a larger cell (also referred to as a "combined cell"). The combined cell can be obtained by placing into electrical and/or mechanical connection the thermal plates provided in each individual cell 24, or by setting different thermal plates provided within the same individual cell 24 at the same predetermined temperature. The combined cell can be useful, for example, when a larger cell (i.e. a larger volume) is needed for a targeted chromatographic application.

It is to be noted that such a combination of the individual cells 24 or thermal plates 26 is reflected in the software used for operating the GC modular oven. The software is designed such that thermal plates can be combined to create larger cells through an interface. As such, the software is configured so that the user can control, combine and operate the GC modular oven 20 or components thereof.

In some implementations, the GC modular oven 20 is provided with a scalable electronics architecture allowing for multiple individual cells 24 to be connected in a network when the chromatographic application requires more space. The electronics architecture may be built around a communication network which allows data to be shared and remotely accessible from the cloud to remotely control and data storage. The accumulated data can be used by the user for advanced data analytics, for example using a third-party software.

The electronics architecture may also permit multiple independent GC modular ovens 20 to be connected. Such a configuration can be useful, for example, when one modular oven 20 is not sufficient to fit all the required GC components, or when the chromatographic application requires physical separation between some of the GC components. Such a requirement can be influenced by safety hazard, or by the context of the targeted application, e.g. when performing impurity analysis in hydrogen and oxygen.

The GC modular oven 20 can be operatively connected to different modules. The modules can be embodied but are not limited to a digital signal process (DSP), a sequencer, a flow controller, a valves controller, a gas detector, digital I/O, analog I/O and/or the like. Such modules are useful for operating the GC modular oven 20 and/or the analysis system and associated computer.

When used in conjunction with the embodiments of the GC modular oven 20 as described above, the modules can also facilitate the system integration, by allowing to install the standard electronic modules that are generally needed to control the GC components. For example, in some implementations, the modules can be used to control the GC modular oven 20 control valves and the electronics for gas detection. All those modules can be installed, for example, on brackets using snaps or similar fasteners, such as snap-lock or buttons. It is to be noted that the modules, such as digital IOs and analog IOs can also be included in the GC modular configuration. Such modules can be provided as external modules, and so may be mounted outside the GC modular oven 20.

It will be understood that the modules can be provided inside or outside the GC modular oven 20. For example, the modules can be mounted on the top and/or at the back of the GC modular oven 20, or elsewhere near the GC modular oven 20. In some implementations, for example, the modules are mounted behind the back panel 38.

In some embodiments, the modules can be connected to form a network. More particularly, it is to be noted that the network somehow reflects the design of the GC modular oven 20, i.e., the arrangement of the individual cells 24. For example, the network can be configured to ensure a proper communication between the individual cells, the different elements provided on and/or with the GC modular oven 20, and/or the modules. In some variants, for example when multiple individual temperature cells are combined, there may be mapping between the individual temperature cells and the different modules.

The network can be used to remotely access the modules, share and/or store data. As such, the network allows operating the modules, which in turn may be used to operate the individual cells 24 or at least some components of the GC modular oven 20 (e.g., the temperature controller 32).

In some embodiments, the thermal plates 26 and/or the mounting plate 40 can be removably mounted or removed into or from the GC modular oven 20, depending on the required configuration of the GC modular oven 20. As such, the thermal plates 26 can be rearranged within the individual cell 24, as and when needed. This feature of the GC modular oven 20 presented in the current description provides modularity and allows to define multiple zones in which the temperature is independently controlled. This feature of the GC modular oven 20 can hence reduce the time and the costs associated with the integration of a GC oven for a specific application and provide more flexibility to the GC system integrator.

It is to be noted that other components, such as detectors (chromatography detectors, as well as gas detectors, e.g. H₂ detector) may be provided with the GC modular oven 20. Such components are typically provided outside of the GC modular oven 20 and may be mounted on top or on a back portion of the GC modular oven 20. As such, the GC modular oven 20 may comprise holes in its main enclosure 22 to allow connection to such components (e.g. a detector) with the components (e.g. a column) provided inside of the GC modular oven 20.

### Examples of implementation

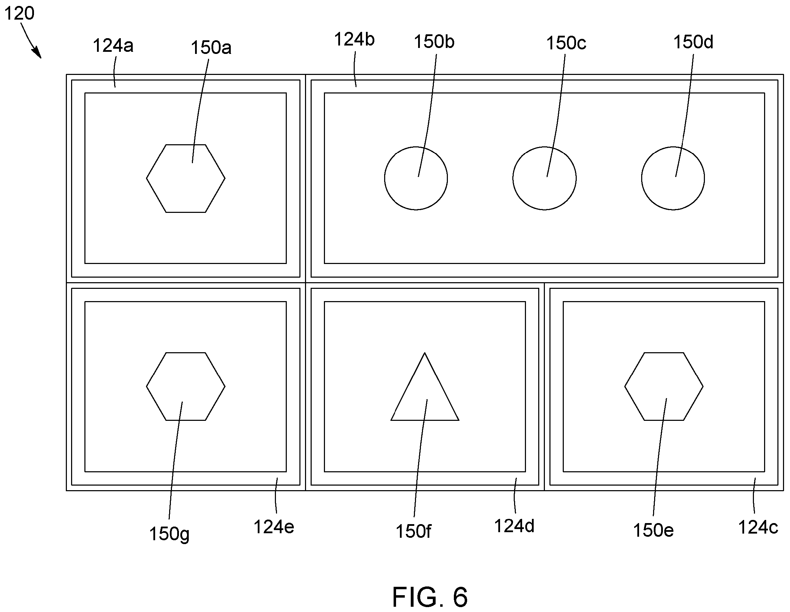

With reference to Figures 6 to 9, different implementations of a GC modular oven will now be described.

In Figure 6, an embodiment of a GC modular oven 120 is shown. The features of the GC modular oven 120 are numbered with reference numerals in the 100 series which correspond to the reference numeral of the previous embodiment. The GC modular oven 120 includes, in the illustrated embodiment, five individual cells 124a-e. Four of the five individual cells include one thermal plate, while the remaining one includes three thermal plates. Each one of the thermal plates can have one or more GC component(s) (noted 150a-g) mounted and/or attached thereon, as well as electrical, mechanical, electromechanical and optical components and/or devices. For example, and without being limitative, the GC component(s) can be embodied by sampler, connection, chromatography valve(s), valve selector(s), flow control valve(s), chromatography column(s), impurities trap(s), and/or the like. Four of the five individual cells 124a-e are approximately of the same size and each occupies a volume *V₁*, while the remaining one is bigger than the four others and occupies a volume *V₂*. In the illustrated embodiment, *V₁* is approximately equal to the half of *V₂.*

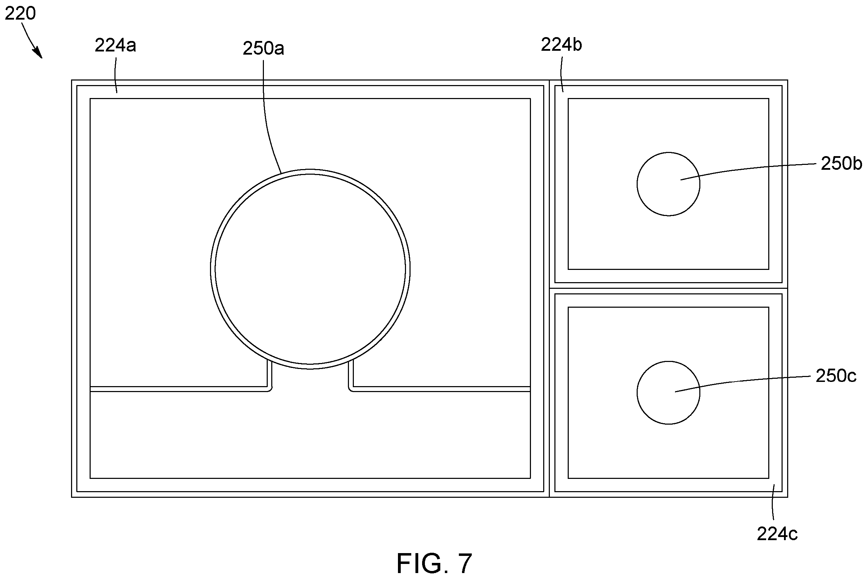

Another embodiment of a GC modular oven 220 is illustrated in Figure 7. The features of the GC modular oven 220 are numbered with reference numerals in the 200 series which correspond to the reference numeral of the previous embodiment. The GC modular oven 220 includes three individual cells 224a-c, each including one thermal plate having one GC component noted 250a-d mounted and/or attached thereon, which can be, for example, similar to the ones which have been previously listed. In this example, one of the three individual cells 224a includes a chromatography column, while the two other 224b and 224c includes one GC component (*e.g*., valves). Two of the three individual cells 224 are approximately of the same size and each occupies a volume *V₃*, while the remaining one is bigger than the two others and occupies a volume *V₄.* In the illustrated embodiment, *V₃* is approximately equal to the quarter of *V₃.*

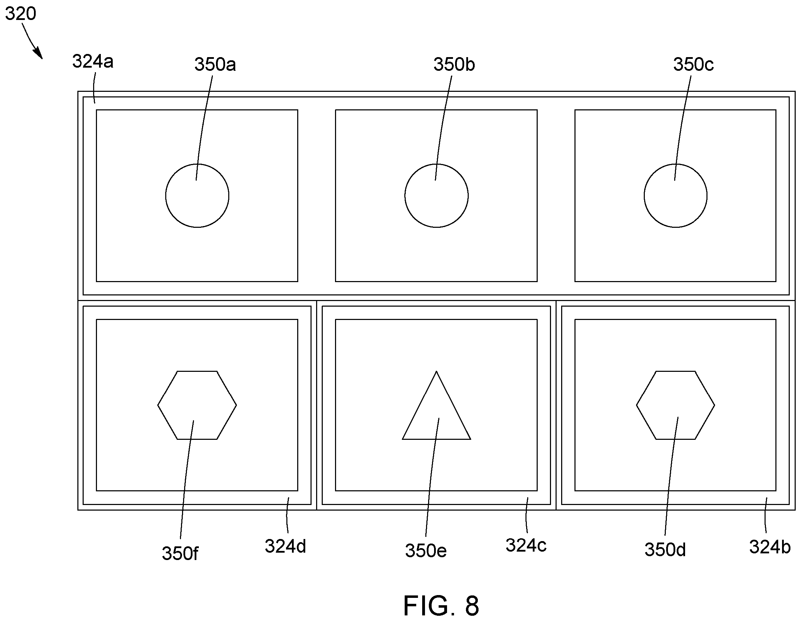

Now turning to Figure 8, an embodiment of a GC modular oven 320 is illustrated. The features of the GC modular oven 320 are numbered with reference numerals in the 300 series which correspond to the reference numeral of the previous embodiment. The GC modular oven 320 includes four individual cells 324a-d, one including three thermal plates each having a corresponding GC component (numbered 350a-c) thereon, and the three others each including one thermal plate having one GC component (350d-f) mounted and/or attached thereon. The GC components 350a-f can be, for example, similar to the ones which have been previously listed Three of the four individual cells 324a-d are approximately of the same size and each occupies a volume *V₅*, while the remaining one is bigger than the three others and occupies a volume *V₆*. In the illustrated embodiment, *V₆* is approximately equal to the third of *V₆.*

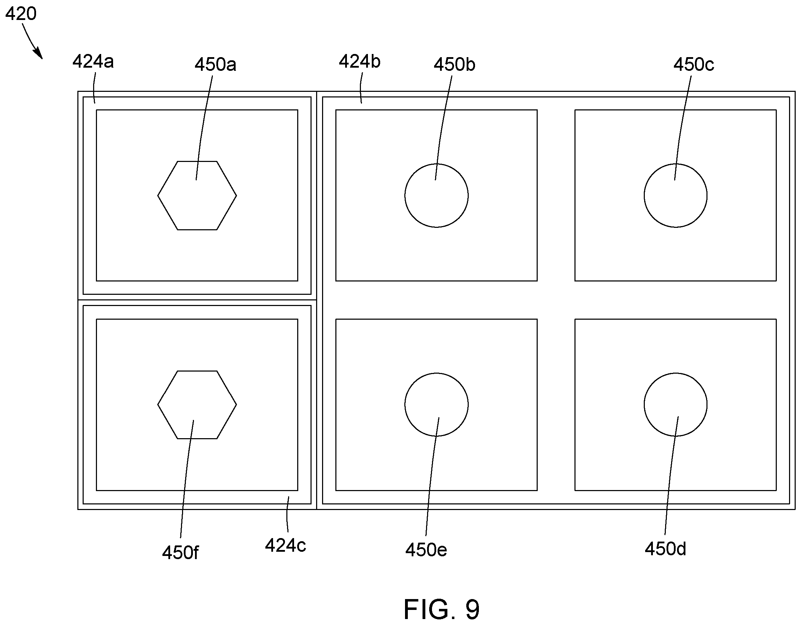

With reference to Figure 9, another embodiment of a GC modular oven 420 is shown. The features of the GC modular oven 420 are numbered with reference numerals in the 400 series which correspond to the reference numeral of the previous embodiment. The GC modular oven 420 includes three individual cells 424a-c, one including four thermal plates, each having one GC component (noted 450a-d) mounted and/or attached thereon, and the two others each including one thermal plate, each including one GC component (noted 450 e-f) mounted thereon. In this embodiment, the GC components 450 a-f can be, for example, similar to the ones which have been previously listed. Two of the three individual cells 424a,c are approximately of the same size and each occupies a volume *V₇*, while the remaining one 424b is bigger than the two others, and occupies a volume *V₈*. In the illustrated embodiment, *V₆* is approximately equal to the quarter of *V₈.*

Once the mechanical assembly done, the software is configured to reflect the mechanical assembly of the GC modular oven 20.

### Chromatographic column cartridges

The GC modular oven can comprise one or more chromatography column cartridge(s). The chromatography column cartridges can be connected with a heating module. Such chromatography column cartridge can be mounted into one of the individual cells of the GC modular oven. Such chromatography column cartridges will now be described

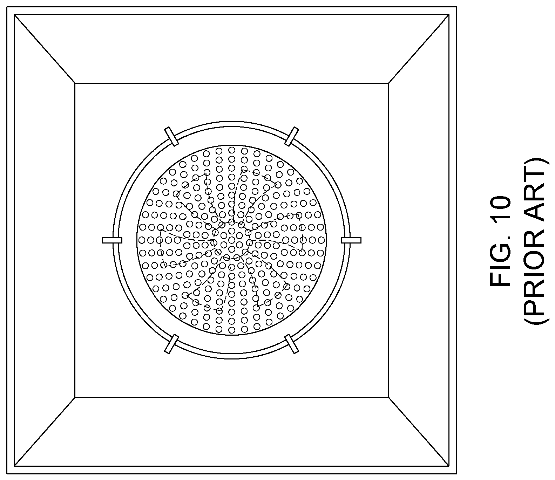

Traditional GC oven, such as the one illustrated in Figure 10, usually includes one ramping oven provided in their back portion. Such a ramping oven typically includes a convection fan and a circular heating element located in front of the fan, so that the heat generated by the heating element is blown in the GC oven chamber when in operation. As such, the temperature in the whole GC oven is the same. Such a traditional GC oven also contain an ambient air inlet and vent, which can be operated, *i.e*., selectively open or closed, so that the GC oven can cool down when needed. One major drawback of the traditional GC ovens is that they are large in internal volume. In some applications, for instance when the chromatography column is a small capillary (compared to the volume of the GC oven chamber) the GC oven and its corresponding large volume (with respect to the size of the small capillary) is uselessly heated. As such, traditional GC ovens could benefit from a better energetical efficiency.

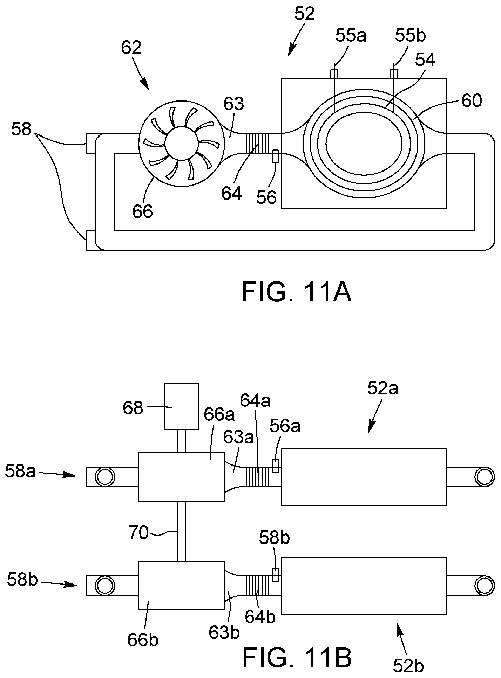

Now referring to Figures 11a and 11b, a chromatography column cartridge 52 (also referred to as "the cartridge 52) is shown. The chromatography column 52 is compatible with a gas chromatography modular oven. Such a modular oven generally includes a main enclosure including a backwall and sidewalls defining an internal volume and individual cells inside the main enclosure. The chromatography column cartridge 52 is releasably engageable with the backwall within an associated one of the individual cells.

Broadly described, the chromatography column cartridge 52 includes a chamber for receiving at least a portion of a chromatography column therein, opposed ports for allowing a passage of an air flow in the chamber; and a heating module provided upstream of the chamber, the heating module being operable for generating, heating and circulating the air flow in the chamber.

More specifically, and as illustrated in Figures 11A-B, the cartridge 52 includes a chromatography column 54, and is provided with opposed ports 58a,b for air circulation.

The cartridge 52 may include a chamber 60 for containing the chromatography column 54. As illustrated, the chamber 60 has the shape of a donut, so that the chromatography column 54 can be wound within (*i.e*., inside) the chamber 60. Such a chamber 60 can be useful, for example, for maintaining the chromatography column 54 in place, but also for ensuring a more efficient heat transfer between the chromatography column 54 and its environment.

More particularly, an external portion of the chamber 60 can contain thermal insulation, so that the chromatography column 54 is surrounded by a thermal insulating material which results in a much smaller air volume around the chromatography column 54 within the chamber 60. Moreover, the shape of the chamber 60 can be useful to reduce the overall GC modular oven 20 internal volume. It will be readily understood that the general shape of the chamber 60 could vary according to the available space in the oven and could be adapted according to a specific application.

Still referring to Figures 11A and 11b, a heating module 62 (sometimes referred to as a "compact module") and a temperature sensor 56 operatively connected to the cartridge 52 are shown. The temperature sensor 56 is operatively connected (*i.e*., coupled) to the heating module 62, for example at its output, so as to monitor the temperature.

As illustrated, the heating module 62 is positioned upstream of the chromatography column 54 and is used to heat the chromatography column 54. As such, the heating module 62 is in thermal connection with the chromatography column 54 and/or the chamber 60.

The heating module 62 may include a heating element 64 and a blower 66. The heating element 64 is a component or a device that converts electricity into heat (*i.e*., thermal energy). Such conversion can be achieved through resistive or Joule heating, for example. As illustrated, the heating module 62 is thermally connected to the chromatography column 54 through a pipe 63. The pipe 63 is provided downstream of the blower 66, but upstream of the chromatography column 54. The compact oven 62 forms a close circuit, and an air flow circulates therein, using the blower 66 and appropriate tubes, pipes (e.g. the pipe 63), and other GC components. The air flow is generated by the blower 66.

The heating module 62 can be connected to the cartridge 52 with couplers, such as quick-connect couplers. Other similar mechanical components could be used.

The heating element 64 can be, for example, and without being limitative, a circular heater, an annular heater, a wire or similar device(s) wound or coiled around the pipe 63. One will readily understand that, in this context, the pipe 63 can be made of a thermal conductive material, so as to conduct the heat from the heating element to an internal portion of the pipe 63.

In an alternate configuration, the heating element 64 could be replaced by a cooling system such as a Peltier cell to cool the chromatography column 54. In such a configuration, the cooling system is in thermal connection with the pipe 63. Such a cooling system could be used, for example, to control or adjust the temperature set by the heating module 62

The temperature of the heating module 62 is controlled by controlling the heat generated by the heating element, for example by adjusting the power of the heating element 64 or an air flow at the output of the heating module 62, *e.g*., by adjusting the blower 66 rotation speed. In some embodiments, control of the power of the heating element 64 is achieved by varying the current flowing through the heating element 64.

The temperature may be controlled by adjusting the air flow by controlling the blower 66 rotation speed. The blower 66 rotation speed may also be controlled depending on the operation mode. In some implementations, when a temperature set point is reached (*i.e*., a predetermined temperature), the blower 66 speed may be reduced in order to reduce the noise. When heating module 62 is operated at a lower temperature (*i.e*., cooled down), the blower 66 speed may be adjusted to evacuate the hot air from the heating module 62.

The heating module 62 can be maintained at isothermal temperature, or ramped at a predetermined rate, according to the targeted application. The inlet and outlet 58 can be used to vent heated air from the cartridge 52.

As it has been previously mentioned, the GC modular oven 20 can contain one or more cartridge(s) 52. For example, as better illustrated in Figure 11B, the GC modular oven can be provided with two cartridges 52a,b. It is to be noted that the cartridges 52a,b could be, but are not necessary, in the same individual cell 24.

It will be understood that the cartridges 52a and 52b can be provided with corresponding inlet/outlet ports 58a,b (sometimes referred to as "opposed ports"), heating elements 64a,b, pipes 63a,b, and blowers 66a,b. When multiple cartridges (e.g. cartridges 52a,b) are provided, each one of the multiple cartridges (e.g. cartridges 52a,b) can have respective independent inlet and outlet, or a respective common inlet and outlet.

In order to keep the design of the GC modular oven 20 as compact as possible, the heating module 62 can be provided with a motor 68 operatively connected to the blower 66. More particularly, in the illustrated variant, only one motor 68 is provided to impart movement to the blowers 66a and 66b through a common shaft 70. The common shaft 70 extends from the motor 68 and is in mechanical connections with the two blowers 66a and 66b. In this variant, two cartridges 52a,52b are superimposed within the same individual cell (not illustrated).

The chromatographic column cartridge 52 and the heating module 62 can be mounted in an individual cell 24 of the GC modular oven 20 which has been previously described. In such scenarios, the individual cell 24 does not include a thermal plate, and the temperature within the corresponding individual cell 24 is adjusted by adjusting the power of the heating element 64 of the heating module 62 or the blower 66 rotational speed. The temperature may be controlled by recirculating the air inside the cartridge 52. It will readily be understood that the heating module 62 is operatively connected to the temperature controller 32, in a similar manner of what has been previously described.

### Explosion-proof gas chromatography modular oven

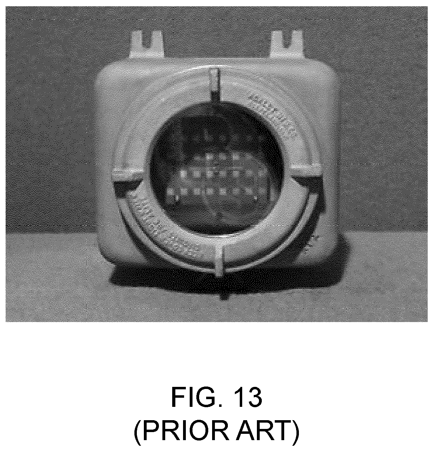

Traditional explosion-proof ramping ovens, as the ones from prior art, usually include a large enclosure with a circular cover mountable to a front portion of the oven. An example of such a traditional explosion-proof compact ramping oven is illustrated in Figure 13.

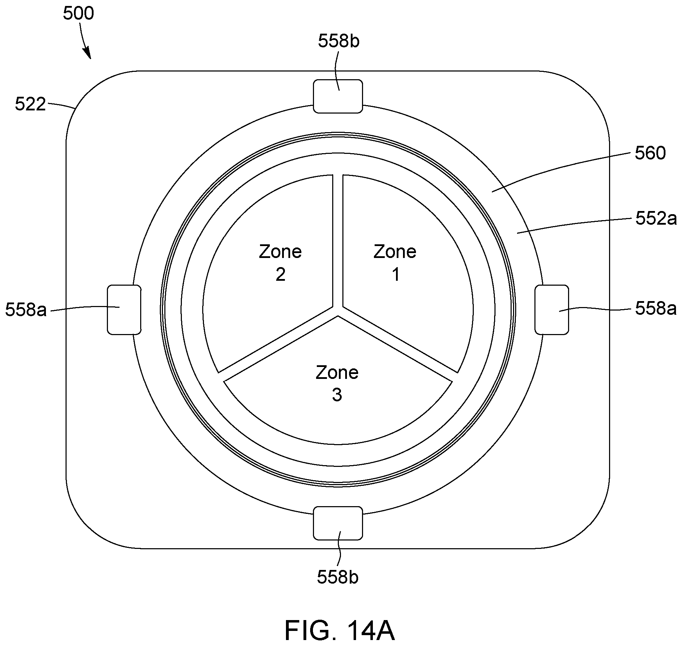

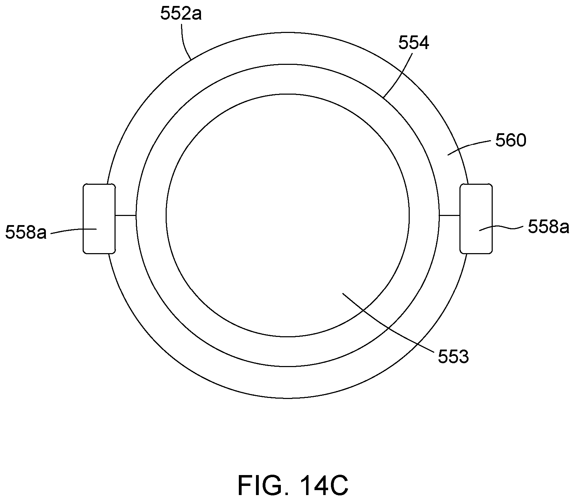

Now referring to Figures 14a to 14c, an explosion-proof gas chromatography modular oven 500, which is sometimes referred to as the "compact ramping oven", or, alternatively, the "explosion-proof oven", is shown. Broadly described, the explosion-proof gas chromatography modular oven 500 includes a main enclosure, individual cells inside the main enclosure, a gas chromatography column cartridge and a secondary enclosure. The main enclosure includes a backwall and sidewalls defining an internal volume. The chromatography column cartridge is releasably engageable with the backwall within an associated one of the individual cells. The chromatography column cartridge includes a chamber for receiving at least a portion of a chromatography column therein and opposed ports for allowing a passage of an air flow in the chamber. The secondary enclosure is generally stackable with the main enclosure and is isolable therefrom. The secondary enclosure includes an inlet port and an outlet port in fluid communication with a respective one of the opposed ports of the chromatography column cartridge and a heating module operable for generating, heating and circulating the air flow in the chamber. It is to be noted that the explosion-proof gas chromatography oven 500 may share common characteristics with the gas chromatography modular oven which have been previously described.

Now turning specifically to Figures 14A-C, the explosion-proof gas chromatography modular oven 500 includes a main enclosure 522 defining an internal volume into which can be mounted different GC components.

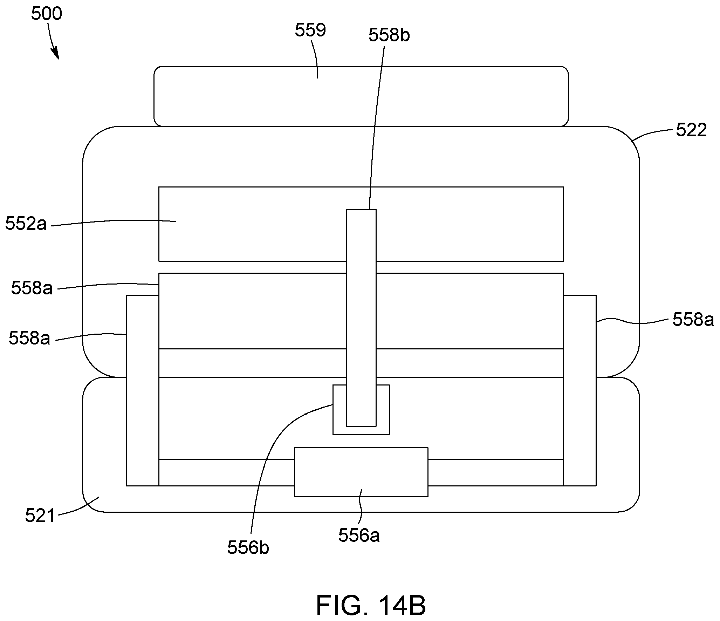

The main enclosure 522 can receive one or more chromatographic column cartridges similar to the ones which have been previously described in terms of design, shape and other characteristics. As better illustrated in Figures 14B-C, the main enclosure 522 includes two chromatographic column cartridges 552a,b and are configured to receive a corresponding chromatography column 554. The chromatographic column cartridges 552a,b could each include respective opposed ports 558a,b for allowing passage of air therein. The chromatographic column cartridges 552a,b can also be insulated with an insulating material provided on the outer surface of the chromatographic column cartridges 552a,b.

In Figures 14A-C, the chromatographic column cartridges 552a,b include a chamber having a donut shape, *i.e*., have a substantially annular cross-section defining an empty space therein. The chamber is sized and configured to receive at least a portion of the gas chromatography column therein. The empty space defined by the inner periphery of the donut-shaped chamber could sometimes be referred to as a compartment 553. It is to be noted that different GC components can be mounted in the compartment 553. In this sense, the compartment 553 is similar to the individual temperature cells which have been previously with respect to the other embodiments of the gas chromatography modular oven, and so could have or share similar functions. Of course, one would readily that the shape and/or geometrical configuration of the chromatographic column cartridges 552a,b and/or the chamber could vary.

The compartment 553 can be divided in multiple zones into which can be mounted and assembled various GC components, such as depicted in the nonlimitative embodiment of Figure 14A, in which different zones are illustrated (*i.e*., zone 1, zone 2 and zone 3). The GC components mounted in the multiple zones of the compartment 553 can be the same, or different, depending on the targeted application.

Now referring to Figure 14B, the explosion-proof gas chromatography modular oven 500 includes a secondary enclosure 521 isolable from the chamber. The secondary enclosure can be mounted and operatively connected to the main enclosure 522. The secondary enclosure 521 is stacked with the main enclosure 522. The secondary enclosure 521 is sized and configured to receive the heating module (not illustrated in Figure 14B) as well as its associated blowers 556a,b. The blowers 556a,b generate and circulate (*i.e*., "blow") the heated (or cooled) air from the compact oven towards a respective one of the chromatographic column cartridges 552a,b through corresponding inlet port 558a,b.

The explosion-proof gas chromatography oven 500 includes a cover 559. The cover 559 can include a male and/or female threaded portion for attachment to a front portion of the main enclosure 522. More particularly, the cover 559 is pivotally mountable to the front portion of the main enclosure 522 (also corresponding to a front portion of the explosion proof gas chromatography oven 500). The cover 559 can be provided with a seal or an insulating material to ensure proper sealing of the explosion-proof oven 500 once the cover 559 is pivotally mounted to the front portion of the main enclosure 522.

## Claims

1. A gas chromatography modular oven (20), comprising:
a main enclosure (22) comprising a backwall (38) and sidewalls (23) defining an internal volume, said sidewalls (23) comprising a plurality of panel-engaging structures defining multiple panel-mounting positions within the internal volume (24);
one or more panels (36) releasably engageable with said panel-engaging structures to divide the main enclosure (22) into individual cells (24); and
one or more thermal plates (26) releasably engageable with said backwall (38) within an associated one of said individual cells (24), each thermal plate (26) being operable to set an operation temperature in the associated individual cell (24), thereby creating temperature-controlled zones within the gas chromatography modular oven (20), **characterized in that**:
each thermal plate (26) comprises:
a mounting plate (40) made of a conductive material;
a heating element (44) contacting the mounting plate (40);
a temperature sensor (46) contacting the mounting plate (40); and
spacers attachable to the mounting plate (40) to maintain the mounting plate (40) spaced apart from said backwall (38) to form a gap between the backwall (38) and the mounting plate (40), the heating element (44) and the temperature sensor (46) being provided in the gap formed between the backwall (38) and the mounting plate (40).

2. The gas chromatography modular oven (20) of claim 1, wherein the backwall (38) and sidewalls (23) are made from a respective material stack, said respective material stack comprising a thermally insulating layer sandwiched between two thermally conductive layers.

3. The gas chromatography modular oven (20) of claim 1 or 2, wherein said one or more panels (36) comprises one or more connecting channels extending therethrough and configured to allow a passage of a gas chromatography column.

4. The gas chromatography modular oven (20) of any one of claims 1 to 3, further comprising mechanical fasteners removably engageable with said one or more panels (36) to attach said one or more panels (36) to an associated one of said backwall (38) and sidewalls (23).

5. The gas chromatography modular oven (20) of any one of claims 1 to 4, wherein said panel-engaging structures comprise slots (37) formed in the sidewalls (23), said one or more panels (23) being slidably engageable with the slots (37).

6. The gas chromatography modular oven (20) of claim 5, further comprising a first impervious seal extending along at least a portion of said slots (37).

7. The gas chromatography modular oven (20) of claim 5 or 6, further comprising a second impervious seal extending along at least a portion of a periphery of said one or more panels (36).

8. The gas chromatography modular oven (20) of claim 1, wherein the mounting plate (40) comprises a cut out (45) provided therethrough.

9. The gas chromatography modular oven (20) of claim 1, further comprising a temperature controller (32) operatively connected to said one or more thermal plates (26), the temperature controller (32) having an associated one of the temperature sensor (46) as an input and an associated one of the heating element (44) as an output.

10. The gas chromatography modular oven (20) of claim 9, wherein the temperature controller (32) is a proportional-integral-derivative controller.

11. The gas chromatography modular oven (20) of claim 1, wherein said one or more thermal plates (26) comprise one or more corresponding thermoelectric devices.

12. The gas chromatography modular oven (20) of claim 1, wherein at least one of said one or more panels (36), said backwall (38) and said mounting plate (40) comprises one or more mounting holes (41) to receive one or more associated gas chromatography components therethrough.

13. The gas chromatography modular oven (20) of any one of claims 1 to 12, wherein each panel (36) has one or more notches (39) engageable with corresponding one or more notches (69) of another one of said one or more panels (36).

## Patentansprüche

1. Modularer Gaschromatografieofen (20), umfassend:
ein Hauptgehäuse (22), das eine Rückwand (38) und Seitenwände (23) umfasst, die ein Innenvolumen definieren, wobei die Seitenwände (23) eine Vielzahl von Paneeleingriffsstrukturen umfassen, die mehrere Paneelmontagepositionen innerhalb des Innenvolumens (24) definieren;
ein oder mehrere Paneele (36), die lösbar in Eingriff mit den Paneeleingriffsstrukturen bringbar sind, um das Hauptgehäuse (22) in einzelne Zellen (24) zu teilen; und
eine oder mehrere Wärmeplatten (26), die lösbar in Eingriff mit der Rückwand (38) innerhalb einer zugehörigen der einzelnen Zellen (24) bringbar sind, wobei jede Wärmeplatte (26) dazu betreibbar ist, eine Betriebstemperatur in der zugehörigen einzelnen Zelle (24) festzulegen, wodurch temperaturgesteuerte Zonen innerhalb des modularen Gaschromatografieofens (20) erzeugt werden, **dadurch gekennzeichnet, dass**:
jede Wärmeplatte (26) Folgendes umfasst:
eine Montageplatte (40), die aus einem leitfähigen Material gefertigt ist;
ein Heizelement (44), das in Kontakt mit der Montageplatte (40) steht;
einen Temperatursensor (46), der in Kontakt mit der Montageplatte (40) steht; und
Abstandshalter, die an die Montageplatte (40) anbringbar sind, um die Montageplatte (40) von der Rückwand (38) beabstandet zu halten, um einen Spalt zwischen der Rückwand (38) und der Montageplatte (40) zu bilden, wobei das Heizelement (44) und der Temperatursensor (46) in dem zwischen der Rückwand (38) und der Montageplatte (40) gebildeten Spalt bereitgestellt sind.

2. Modularer Gaschromatografieofen (20) nach Anspruch 1, wobei die Rückwand (38) und die Seitenwände (23) aus einem jeweiligen Materialstapel gefertigt sind, wobei der jeweilige Materialstapel eine Wärmeisolierschicht umfasst, die zwischen zwei Wärmeleitschichten angeordnet ist.

3. Modularer Gaschromatografieofen (20) nach Anspruch 1 oder 2, wobei das eine oder die mehreren Paneele (36) einen oder mehrere Verbindungskanäle umfassen, die sich dort hindurch erstrecken und dazu konfiguriert sind, einen Durchgang einer Gaschromatografiesäule zu ermöglichen.

4. Modularer Gaschromatografieofen (20) nach einem der Ansprüche 1 bis 3, ferner umfassend mechanische Befestigungsmittel, die entfernbar in Eingriff mit dem einen oder den mehreren Paneelen (36) bringbar sind, um das eine oder die mehreren Paneele (36) an einer zugehörigen von der Rückwand (38) und den Seitenwänden (23) anzubringen.

5. Modularer Gaschromatografieofen (20) nach einem der Ansprüche 1 bis 4, wobei die Paneeleingriffsstrukturen Schlitze (37) umfassen, die in den Seitenwänden (23) gebildet sind, wobei das eine oder die mehreren Paneele (23) gleitbar in Eingriff mit den Schlitzen (37) bringbar sind.

6. Modularer Gaschromatografieofen (20) nach Anspruch 5, ferner umfassend eine erste undurchlässige Dichtung, die sich entlang mindestens eines Abschnitts der Schlitze (37) erstreckt.

7. Modularer Gaschromatografieofen (20) nach Anspruch 5 oder 6, ferner umfassend eine zweite undurchlässige Dichtung, die sich entlang mindestens eines Abschnitts eines Umfangs des einen oder der mehreren Paneele (36) erstreckt.

8. Modularer Gaschromatografieofen (20) nach Anspruch 1, wobei die Montageplatte (40) einen dort hindurch bereitgestellten Ausschnitt (45) umfasst.

9. Modularer Gaschromatografieofen (20) nach Anspruch 1, ferner umfassend eine Temperatursteuerung (32), die mit der einen oder den mehreren Wärmeplatten (26) wirkverbunden ist, wobei die Temperatursteuerung (32) einen zugehörigen des Temperatursensors (46) als Eingabe und ein zugehöriges des Heizelements (44) als Ausgabe aufweist.

10. Modularer Gaschromatografieofen (20) nach Anspruch 9, wobei die Temperatursteuerung (32) eine Proportional-Integral-Derivativ-Steuerung ist.

11. Modularer Gaschromatografieofen (20) nach Anspruch 1, wobei die eine oder die mehreren Wärmeplatten (26) eine oder mehrere entsprechende thermoelektrische Vorrichtungen umfassen.

12. Modularer Gaschromatografieofen (20) nach Anspruch 1, wobei mindestens eines von dem einen oder den mehreren Paneelen (36), der Rückwand (38) und der Montageplatte (40) ein oder mehrere Montagelöcher (41) umfasst, um eine oder mehrere zugehörige Gaschromatografiekomponenten dort hindurch aufzunehmen.

13. Modularer Gaschromatografieofen (20) nach einem der Ansprüche 1 bis 12, wobei jedes Paneel (36) eine oder mehrere Kerben (39) aufweist, die in Eingriff mit einer oder mehreren entsprechenden Kerben (69) eines anderen des einen oder der mehreren Paneele (36) bringbar sind.

## Revendications

1. Four modulaire pour chromatographie en phase gazeuse (20), comprenant :
une enceinte principale (22) comprenant une paroi arrière (38) et des parois latérales (23) définissant un volume interne, lesdites parois latérales (23) comprenant une pluralité de structures d'engagement de panneaux définissant de multiples positions de montage de panneaux dans le volume interne (24) ;
un ou plusieurs panneaux (36) pouvant être engagés de manière amovible avec lesdites structures d'engagement de panneaux pour diviser l'enceinte principale (22) en cellules individuelles (24) ; et
une ou plusieurs plaques thermiques (26) pouvant être engagées de manière amovible avec ladite paroi arrière (38) à l'intérieur d'une cellule individuelle associée (24), chaque plaque thermique (26) pouvant être utilisée pour régler une température de fonctionnement dans la cellule individuelle associée (24), créant ainsi des zones à température contrôlée à l'intérieur du four modulaire pour chromatographie en phase gazeuse (20), **caractérisé en ce que** :
chaque plaque thermique (26) comprend :
une plaque de montage (40) faite d'un matériau conducteur ;
un élément chauffant (44) en contact avec la plaque de montage (40) ;
un capteur de température (46) en contact avec la plaque de montage (40) ; et
des entretoises pouvant être fixées à la plaque de montage (40) pour maintenir la plaque de montage (40) à distance de ladite paroi arrière (38) afin de former un espace entre la paroi arrière (38) et la plaque de montage (40), l'élément chauffant (44) et le capteur de température (46) étant placés dans l'espace formé entre la paroi arrière (38) et la plaque de montage (40).

2. Four modulaire pour chromatographie en phase gazeuse (20) selon la revendication 1, dans lequel la paroi arrière (38) et les parois latérales (23) sont faites d'un empilement de matériaux respectifs, ledit empilement de matériaux respectifs comprenant une couche thermiquement isolante prise en sandwich entre deux couches thermiquement conductrices.

3. Four modulaire pour chromatographie en phase gazeuse (20) selon la revendication 1 ou 2, dans lequel lesdits un ou plusieurs panneaux (36) comprennent un ou plusieurs canaux de connexion s'étendant à travers eux et configurés pour permettre le passage d'une colonne pour chromatographie en phase gazeuse.

4. Four modulaire pour chromatographie en phase gazeuse (20) selon l'une quelconque des revendications 1 à 3, comprenant en outre des attaches mécaniques pouvant être engagées de manière amovible avec lesdits un ou plusieurs panneaux (36) pour fixer lesdits un ou plusieurs panneaux (36) à une paroi arrière (38) et à des parois latérales (23) associées.

5. Four modulaire pour chromatographie en phase gazeuse (20) selon l'une quelconque des revendications 1 à 4, dans lequel lesdites structures d'engagement des panneaux comprennent des fentes (37) formées dans les parois latérales (23), lesdits un ou plusieurs panneaux (23) pouvant être engagés de manière coulissante dans les fentes (37).

6. Four modulaire pour chromatographie en phase gazeuse (20) selon la revendication 5, comprenant en outre un premier joint étanche s'étendant le long d'au moins une partie desdites fentes (37).

7. Four modulaire pour chromatographie en phase gazeuse (20) selon la revendication 5 ou 6, comprenant en outre un second joint étanche s'étendant le long d'au moins une partie de la périphérie desdits un ou plusieurs panneaux (36).

8. Four modulaire pour chromatographie en phase gazeuse (20) selon la revendication 1, dans lequel la plaque de montage (40) comporte une découpe (45) prévue à travers celle-ci.

9. Four modulaire pour chromatographie en phase gazeuse (20) selon la revendication 1, comprenant en outre un régulateur de température (32) relié de manière fonctionnelle auxdites une ou plusieurs plaques thermiques (26), le régulateur de température (32) ayant l'un associé du capteur de température (46) comme entrée et l'un associé de l'élément chauffant (44) comme sortie.

10. Four modulaire pour chromatographie en phase gazeuse (20) selon la revendication 9, dans lequel le régulateur de température (32) est un régulateur proportionnel-intégral-dérivé.

11. Four modulaire pour chromatographie en phase gazeuse (20) selon la revendication 1, dans lequel lesdites une ou plusieurs plaques thermiques (26) comprennent un ou plusieurs dispositifs thermoélectriques correspondants.

12. Four modulaire pour chromatographie en phase gazeuse (20) selon la revendication 1, dans lequel au moins l'un parmi lesdits un ou plusieurs panneaux (36), ladite paroi arrière (38) et ladite plaque de montage (40) comprend un ou plusieurs trous de montage (41) pour recevoir un ou plusieurs composants pour chromatographie en phase gazeuse associés à travers ceux-ci.

13. Four modulaire pour chromatographie en phase gazeuse (20) selon l'une des revendications 1 à 12, dans lequel chaque panneau (36) comporte une ou plusieurs encoches (39) pouvant être engagées dans une ou plusieurs encoches correspondantes (69) d'un autre desdits un ou plusieurs panneaux (36).
